(19) Europäisches Patentamt / European Patent Office / Office européen des brevets

(11) **EP 2 852 959 B1**

(12) **FASCICULE DE BREVET EUROPEEN**

(45) Date de publication et mention de la délivrance du brevet:
**09.10.2019 Bulletin 2019/41**

(21) Numéro de dépôt: **13724272.3**

(22) Date de dépôt: **22.05.2013**

(51) Int Cl.:
***H01F 41/34*** *(2006.01)*

(86) Numéro de dépôt international:
**PCT/EP2013/060540**

(87) Numéro de publication internationale:
**WO 2013/174881 (28.11.2013 Gazette 2013/48)**

(54) **PROCÉDÉ DE FABRICATION D'UN FILM COMPRENANT DES MICROSTRUCTURES MAGNÉTIQUES TRIDIMENSIONNELLES**

HERSTELLUNGSVERFAHREN EINER DÜNNEN SCHICHT ENTHALTEND MAGNETISCHE DREIDIMENSIONALE MIKROSTRUKTUREN

MANUFACTURING PROCESS OF A THIN FILM COMPRISING MAGNETIC TRIDIMENSIONAL MICROSTRUCTURES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.05.2012 FR 1254667**
**22.05.2012 US 201261650398 P**

(43) Date de publication de la demande:
**01.04.2015 Bulletin 2015/14**

(73) Titulaires:
- **Centre National de la Recherche Scientifique (C.N.R.S.)**
  **75016 Paris (FR)**
- **Université Joseph Fourier - Grenoble 1**
  **38400 Saint-Martin-d'Hères (FR)**

(72) Inventeurs:
- **DEMPSEY, Nora**
  **38000 Grenoble (FR)**
- **DUMAS-BOUCHIAT, Frédéric**
  **87220 Feytiat (FR)**
- **ZANINI, Luiz Fernando**
  **75012 Paris (FR)**
- **GIVORD, Dominique**
  **38100 Grenoble (FR)**

(74) Mandataire: **Lavoix**
**2, place d'Estienne d'Orves**
**75441 Paris Cedex 09 (FR)**

(56) Documents cités:

- **VEZY C ET AL: "Simple method for reversible bonding of a polydimethylsiloxane microchannel to a variety of substrates", MICRO AND NANO LETTERS, THE INSTITUTION OF ENGINEERING AND TECHNOLOGY, MICHAEL FARADAY HOUSE, SIX HILLS WAY, STEVENAGE, HERTS. SG1 2AY, UK, vol. 6, no. 10, 31 octobre 2011 (2011-10-31), pages 871-873, XP006042115, DOI: 10.1049/MNL.2011.0492**
- **DAVID ISSADORE ET AL: "Self-assembled magnetic filter for highly efficient immunomagnetic separation", LAB ON A CHIP, vol. 11, no. 1, 1 janvier 2011 (2011-01-01), page 147, XP055049322, ISSN: 1473-0197, DOI: 10.1039/c0lc00149j**
- **FAHRNI F ET AL: "Magnetization and actuation of polymeric microstructures with magnetic nanoparticles for application in microfluidics", JOURNAL OF MAGNETISM AND MAGNETIC MATERIALS, ELSEVIER SCIENCE PUBLISHERS, AMSTERDAM, NL, vol. 321, no. 12, 1 juin 2009 (2009-06-01), pages 1843-1850, XP026043867, ISSN: 0304-8853, DOI: 10.1016/J.JMMM.2008.11.090 [extrait le 2008-12-03]**
- **Y.-J. WENG ET AL: "Development and research for applying innovative magnetic soft mold imprinting techniques in microstructure component manufacturing", POLYMERS FOR ADVANCED TECHNOLOGIES, vol. 19, no. 9, 1 septembre 2008 (2008-09-01), pages 1177-1184, XP055049994, ISSN: 1042-7147, DOI: 10.1002/pat.1099**

# Description

## DOMAINE DE L'INVENTION

La présente invention concerne un procédé de fabrication d'un film comprenant une matrice non magnétique et une pluralité de microstructures magnétiques tridimensionnelles ordonnées au sein de la matrice selon un motif déterminé.

## ARRIERE PLAN DE L'INVENTION

La magnétophorèse concerne le déplacement d'un objet sous l'effet d'un champ magnétique inhomogène.

Elle est actuellement mise à profit pour la manipulation telle que le piégeage, la séparation, le mélange et le transport d'objets incluant par exemple des espèces biologiques fonctionnalisées par des nano ou microparticules magnétiques.

La force magnétophorétique agissant sur une particule magnétique est donnée par l'expression :

$$F_m = M_p \; \nabla B \qquad (1)$$

où $M_p$ est le moment magnétique de la particule, proportionnel à son volume, et $\nabla B$ est le gradient de champ magnétique dans lequel est placée la particule.

D'après l'équation (1), la force magnétique exercée sur un objet placé dans un champ magnétique homogène est nulle, et ceci indépendamment de la valeur du champ magnétique, aussi élevée soit-elle.

En conséquence, une des conditions nécessaire pour la génération de forces magnétiques significatives est l'existence d'un gradient de champ magnétique, i.e., l'existence d'une inhomogénéité locale du champ magnétique dans l'espace.

On cherche donc à générer des gradients de champ magnétique les plus forts possibles, et ce, à l'échelle sub-millimétrique.

A l'heure actuelle, les micro-dispositifs principalement développés pour le contrôle et/ou la manipulation d'objets ferromagnétiques ou superparamagnétiques utilisent des micro-bobines ou des matériaux doux couplés à un champ magnétique externe, éventuellement en association.

Le premier type de micro-dispositifs est fondé sur l'utilisation de micro-bobines typiquement réalisées par des techniques de microfabrication conventionnelles telle que la photolithographie.

Cependant, ces micro-bobines souffrent de trois inconvénients majeurs.

D'une part, les champs magnétiques générés sont limités par l'échauffement du circuit.

En effet, le champ magnétique généré par une bobine de résistance R est directement proportionnel à l'intensité I du courant qui la traverse.

Le passage d'un courant d'intensité I, pendant un temps t, dans un circuit provoque un échauffement par effet Joule ($RI^2 \times t$), ce qui entraine irrémédiablement une limitation du courant et donc une limitation du champ magnétique généré.

A titre d'exemple, le courant permanent dans un conducteur de cuivre de section 100 $\mu m^2$ est de l'ordre de $10^{-4}$ A.

Le champ magnétique d'une simple spire de 10 $\mu m$ de rayon d'un tel conducteur est de l'ordre de 0,1 mT et le gradient de champ magnétique maximum de l'ordre de $10^2$ T/m.

Alimentées en courant pulsé, les micro-bobines peuvent générer des champs bien plus élevés qu'en courant continu, typiquement 1000 fois supérieurs, mais durant un temps souvent inférieur à la milliseconde, peu adapté aux applications visées.

Par ailleurs, ces micro-bobines nécessitent toujours, pour leur fonctionnement, une alimentation externe en courant.

Le second type de micro-dispositifs couple l'utilisation de matériaux magnétiques doux à un champ magnétique macroscopique externe.

Placé dans un champ magnétique externe, le matériau magnétique doux s'aimante et se comporte alors de façon similaire à un aimant permanent en tant que source de champ.

Les matériaux doux pour micro-sources de champ magnétique sont réalisés par des techniques de micro/nano fabrication.

Les sources de champ magnétiques obtenues ont la taille des motifs des matériaux doux réalisés, avec une dimension sub-millimétrique.

Placés dans un champ magnétique macroscopique externe, ces sources produisent de forts champ et gradient de champ magnétiques, fortement modulé à l'échelle des motifs.

L'utilisation d'un champ magnétique externe variable et commutable rend ces sources magnétiques variables et commutables.

Enfin, la fabrication de dispositifs comprenant un film en un matériau magnétique dur déposé sur un substrat de silicium, structuré soit topographiquement en utilisant les techniques de micro-fabrication [Walther09], soit thermo-magnétiquement [Dumas-Bouchiat10], de sorte à former une pluralité de micro-aimants, a récemment été décrite.

Ces dispositifs présentent l'avantage d'être autonomes, puisque, une fois aimantés, ils ne nécessitent ni source d'énergie ni source de champ magnétique externe.

Par ailleurs, les micro-aimants ainsi formés produisent de forts gradients de champ magnétique, jusqu'à $10^6$ T/m.

Cependant, la fabrication de ces différents dispositifs est onéreuse car elle nécessite des technologies de pointe, et elle ne se prête donc pas à la fabrication de grandes séries de dispositifs à faibles coûts.

En particulier, les techniques basées sur des substrats de silicium sont limitées par les tailles disponibles de ces substrats et se heurtent donc à l'impossibilité de former des dispositifs de grandes dimensions.

Par ailleurs, une certaine flexibilité des dispositifs serait souhaitable pour certaines applications.

Par ailleurs, il serait utile, par exemple pour les applications in-vitro, de disposer de dispositifs transparents ou tout au moins translucides de sorte à pouvoir observer par microscopie optique en transmission le comportement des particules influencées par le champ magnétique généré.

Dans l'article de D. Issadore et al, « Self-Assembled magnetic filter for highly efficient immunomagnetic séparation», Lab Chip, 2011, 11, pp. 147-151, il est fait état de la fabrication d'un film polymère comprenant la mise en suspension, dans du polydimethylsiloxane (PDMS), de particules de NdFeB, l'aimantation desdites particules par l'application d'un champ magnétique externe intense, puis la réticulation du PDMS, figeant les particules de NdFeB.

Cependant, la répartition des particules dans la matrice de PDMS est aléatoire.

Par ailleurs, chaque particule est isolée des particules qui l'environnent, de sorte que les pièges ainsi constitués sont de la taille d'une particule unitaire et présentent donc une faculté de piégeage limitée.

L'article "Simple method for réversible bonding of a polydimethylsiloxane microchannel to a variety of substrates", Micro & Nano Letters, vol. 6, no. 10, pages 871-873 par C. Vézy et al. montre des amas de nanoparticules magnétiques de 100 nm qui sont organisés de manière temporaire dans un micro-canal gravé dans un film de type PDMS.

Il subsiste donc un besoin pour la fabrication d'un dispositif procurant, à l'échelle submillimétrique, un gradient de champ magnétique élevé et qui puisse être fabriqué à moindre coût.

Par ailleurs, selon les applications visées, ce dispositif doit pouvoir être flexible et/ou transparent.

Un autre but de l'invention est de définir un procédé simple et économique de fabrication d'un dispositif susceptible d'être aimanté soit de manière permanente, soit sous l'action d'un champ magnétique externe pour générer un gradient de champ magnétique important à l'échelle sub-millimétrique.

**BREVE DESCRIPTION DE L'INVENTION**

Conformément à l'invention, il est proposé un procédé de fabrication d'un film comprenant une matrice non magnétique et une pluralité de microstructures magnétiques tridimensionnelles ordonnées au sein de ladite matrice selon un motif déterminé, comprenant les étapes de :

- fourniture d'un substrat, dit substrat maître, comprenant une face dite magnétiquement structurée constituée d'une pluralité de micro-sources de champ magnétique, présentant un gradient de champ magnétique compris entre $10^2$ et $10^6$ T/m,

- apport, sur la face magnétiquement structurée dudit substrat maître, de micro ou nanoparticules magnétiques, lesdites particules s'agglomérant en microstructures tridimensionnelles ordonnées sous l'effet de la force magnétophorétique attractive exercée par le gradient de champ magnétique à la surface du substrat maître,

- dépôt sur la face magnétiquement structurée du substrat maître, d'une matrice d'un matériau non magnétique, de sorte à englober lesdites microstructures ordonnées et former ledit film,

- délaminage vis-à-vis du substrat maître dudit film.

Par nanoparticule, on entend une particule dont les trois dimensions sont à l'échelle nanométrique, c'est-à-dire dont la taille caractéristique, par exemple le diamètre moyen, est inférieur à 100 nm.

Par microparticule, on entend une particule dont les trois dimensions sont à l'échelle micrométrique, c'est-à-dire dont la taille caractéristique, par exemple le diamètre moyen, est compris entre 100 nm et 1 mm.

Par micro-aimant, on entend un aimant dont au moins deux dimensions sont à l'échelle micrométrique, c'est-à-dire dont l'épaisseur et la longueur et/ou la largeur sont comprises entre 100 nm et 100 μm.

Par structuration magnétique d'une surface (qu'elle soit plane, courbe et/ou présente des reliefs (plots ou cavités)), on entend que la surface présente des régions d'aimantations différentes, réparties selon un motif déterminé.

Par facteur de remplissage, on entend le rapport entre le volume occupé par les nano ou microparticules ordonnées en structures tridimensionnelles dans une portion du film et le volume de la portion considéré.

Selon un mode de réalisation, avant le dépôt des micro ou nanoparticules magnétiques, on dépose sur la face magnétiquement structurée du substrat maître une couche de sorte à faciliter le délaminage ultérieur du film vis-à-vis du substrat maître.

La matrice peut être en un matériau élastomère, ce qui permet de former un film flexible.

Pour d'autres applications, la matrice peut être au contraire en un matériau rigide.

Parmi les matériaux préférés pour la matrice, on peut citer un élastomère (par exemple polydiméthylsiloxane (PDMS), caoutchouc, etc.), un matériau thermoplastique (par exemple polyméthacrylate de méthyle (PMMA), parylène, polystyrène, etc.), un matériau thermodurcissable (par exemple polyester, résine époxy, bakélite, résine photosensible (par exemple SU-8), etc.),,un oxyde tel que $SiO_2$, $Al_2O_3$, $HfO_2$, un métal tel que Cu, Ag, ou un matériau carboné, tel que le graphite, ou le DLC.

De manière particulièrement avantageuse, pendant ou après le dépôt desdites micro ou nanoparticules sur le substrat maître, on agite ledit substrat maître et/ou les particules de sorte à optimiser la répartition des micro ou nanoparticules vis-à-vis des micro-sources de champ magnétique.

Par ailleurs, avant le dépôt de la matrice non magnétique, on peut appliquer un jet de gaz sur le substrat maître, de sorte à optimiser la répartition des nanoparticules vis-à-vis des micro-sources de champ magnétique et/ou à éliminer les particules non piégées par le champ magnétique du substrat maître.

Selon une forme d'exécution avantageuse, avant le dépôt de la matrice non magnétique, on dépose sur les microstructures ordonnées à la surface du substrat maître un ligand en phase liquide de sorte à renforcer la cohésion mécanique des micro ou nanoparticules formant lesdites microstructures.

Le film résultant de ce procédé présente ainsi deux faces opposées entre lesquelles le facteur de remplissage en micro ou nanoparticules varie, la face préalablement au contact du substrat maître présentant à son voisinage un facteur de remplissage supérieur au facteur de remplissage au voisinage de la face opposée.

Eventuellement, après le délaminage du film, on dépose sur au moins une partie de la surface du film un matériau électriquement conducteur.

Selon une application de l'invention, lorsque le film est flexible, on peut l'enrouler de sorte à former un tube.

Selon une forme de réalisation de l'invention, la face magnétiquement structurée du substrat maître présente au moins une cavité et/ou au moins un plot, de sorte qu'après le délaminage, le film présente un plot et/ou une cavité respectivement complémentaire de la cavité et/ou du plot du substrat maître.

Selon une autre forme de réalisation de l'invention, la matrice comprend un matériau thermoplastique et après le délaminage du film, on met en forme ledit film contre un moule par thermoformage.

Selon une forme d'exécution de l'invention, les micro ou nanoparticules sont en un matériau magnétique doux.

De manière préférée, lesdites micro ou nanoparticules sont alors en l'un des matériaux suivants : Fe, CoFe, NiFe, $Fe_3O_4$, ou $Fe_2O_3$.

De manière alternative, les micro ou nanoparticules sont en un matériau magnétique dur.

Lesdites micro ou nanoparticules sont alors de préférence en l'un des matériaux suivants : NdFeB, FePt, SmCo, $BaFe_{12}O_{19}$, $SrFe_{12}O_{19}$, ou $CoFe_2O_4$.

Dans ce cas, on peut avantageusement soumettre le film à un champ magnétique externe de sorte à aimanter de manière permanente les microstructures magnétiques tridimensionnelles.

Selon d'autres caractéristiques de l'invention, prises seules ou en combinaison :

- la taille caractéristique moyenne des micro ou nanoparticules magnétiques est comprise entre 10 nm et 100 $\mu$m ;
- une dimension desdites microstructures magnétiques tridimensionnelles dans un plan parallèle à la face magnétiquement structurée du substrat maître est comprise entre 10 nm et 500 $\mu$m ;
- la dimension desdites microstructures magnétiques tridimensionnelles dans un plan perpendiculaire à la face magnétiquement structurée du substrat maître est comprise entre 10 nm et 1 mm.

L'invention concerne également un procédé de fabrication d'un dispositif magnétique comprenant une pluralité de micro-aimants, comprenant la fabrication d'un film selon le procédé décrit ci-dessus et l'application d'un champ magnétique externe audit film de sorte à aimanter les microstructures magnétiques tridimensionnelles enfermées dans la matrice de celui-ci.

**BREVE DESCRIPTION DES DESSINS**

D'autres caractéristiques et avantages de l'invention ressortiront de la description détaillée qui va suivre, en référence aux dessins annexés sur lesquels :

- les figures 1A à 1F illustrent de manière schématique différentes étapes, dont certaines sont optionnelles, de fabrication d'un film selon un mode de réalisation de l'invention ;
- la figure 1G illustre de manière schématique une variante du mode de réalisation des figures 1A à 1D ;
- les figures 2A à 2D illustrent de manière schématique différentes étapes de fabrication d'un film selon un mode de réalisation de l'invention ;
- la figure 4 illustre la formation d'un tube à partir d'un film obtenu selon l'invention ;
- la figure 6A 6A présente une image en vue de dessus d'un film obtenu selon l'invention.

Pour faciliter la compréhension des schémas, ceux-ci n'ont pas été réalisés à l'échelle.

**DESCRIPTION DETAILLEE DE MODES DE REALISATION DE L'INVENTION**

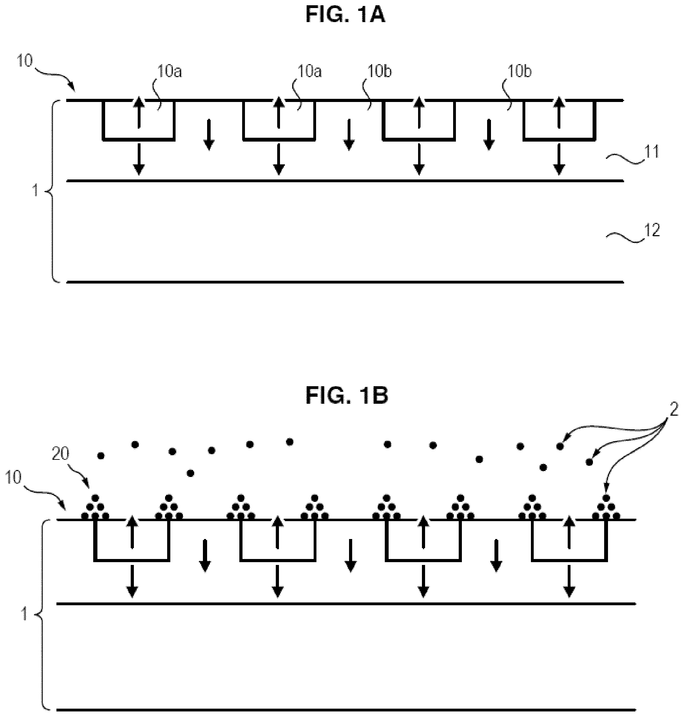

En référence à la figure 1A, on utilise un substrat maître 1 pour ordonner des nano ou microparticules avant de les enfermer dans une matrice non magnétique.

Substrat maître

Ledit substrat maître 1 présente une face magnétiquement structurée, c'est-à-dire une face 10 constituée d'une pluralité de micro-sources 10a, 10b de champ magnétique.

L'aimantation des différentes micro-sources est schématisée par une flèche.

Sur les figures 1A à 1G, la face magnétiquement structurée 10 du substrat maître est plane.

Cependant, dans certaines formes d'exécution de l'invention, il peut être préférable d'employer un substrat maître dont la face n'est pas plane mais présente des cavités ou des plots, afin de reproduire dans le film formé à partir du substrat maître des plots ou des cavités complémentaires.

Le substrat maître peut être fabriqué par différentes techniques connues de l'homme du métier.

Selon un mode de réalisation, la fabrication du substrat maître implique la mise en oeuvre de deux étapes successives principales :

- la synthèse d'un film magnétique performant sur une épaisseur de l'ordre de 1 à 100 $\mu$m;
- la réalisation de micro-aimants par structuration magnétique dudit film.

De manière particulièrement avantageuse, la synthèse du film magnétique peut être réalisée par dépôt par voie physique par pulvérisation triode.

A titre d'exemple, des couches de NdFeB et de SmCo ont été synthétisées et possèdent de remarquables propriétés magnétiques [Dempsey07, Walther08].

D'autres méthodes de fabrication d'aimants en couches peuvent être envisagés, en particulier les dépôts électrolytiques, les dépôts sol-gel, les dépôts par évaporation, le dépôt laser pulsé, etc.

A partir du film ainsi synthétisé, la génération de champs magnétiques et de gradients de champs magnétiques importants requiert une structuration magnétique à l'échelle submillimétrique.

Deux techniques présentées ci-dessous peuvent être employées à cet effet.

D'une part, la structuration magnétique par la méthode dite « topographique » consiste à structurer avant dépôt la topologie de surface du substrat sur lequel le matériau magnétique est ensuite déposé et/ou à structurer directement la topologie de la couche magnétique.

Ceci revient à former une couche magnétique qui n'est pas plane mais qui comprend des micro-plots et/ou des micro-cavités.

Les dimensions des structurations topographiques déterminent les dimensions des micro-aimants obtenus.

Chaque élément de film magnétique gravé et/ou déposé sur un micro-plot ou dans une micro-cavité du substrat peut être assimilé, après aimantation, à un micro-aimant indépendant.

Notons que des étapes de lithographie optique, d'attaque chimique et de planarisation peuvent être nécessaires.

Les micro-éléments ainsi réalisés sont ensuite aimantés selon une direction choisie.

Ils constituent alors un ensemble de micro-aimants indépendants, présentant toutes la même direction d'aimantation.

Dans ce procédé, le matériau magnétique peut être dur, auquel cas l'aimantation des micro-aimants est permanente et le substrat maître est alors autonome, c'est-à-dire ne nécessite aucune alimentation en énergie ni aucune application d'un champ magnétique externe.

De manière alternative, le matériau magnétique employé est un matériau doux.

Dans ce cas, l'utilisation du substrat maître nécessite l'application simultanée d'un champ magnétique externe pour aimanter les micro-aimants.

Ces micro-aimants individuels, situés à différentes hauteurs par rapport à une surface moyenne du film magnétique, constituent des systèmes présentant de très forts gradients de champ magnétique aux échelles micrométriques.

D'autre part, la structuration magnétique par empreinte thermo-magnétique (« Thermo-Magnetic Patterning » ou TMP selon la terminologie anglo-saxonne) consiste à utiliser une source de chaleur pour chauffer localement certaines zones d'une couche magnétiquement dure et ainsi créer des volumes d'aimantation de directions alternées, constituant des micro-aimants.

A titre d'exemple, on peut employer comme source de chaleur un laser impulsionnel nanoseconde.

Une couche magnétique dure est aimantée dans une direction et un sens donné.

Cette couche est ensuite placée dans un champ magnétique externe uniforme $H_{ext}$ ($\mu_0 H_{ext} < \mu_0 H_c$) de direction opposée à la direction d'aimantation originelle, puis elle est localement irradiée par un laser impulsionnel à excimères de type KrF (248 nm).

La température à la surface des zones irradiées augmente très rapidement puis la chaleur se diffuse dans le matériau.

Etant donné la diminution du champ coercitif $\mu_0 H_c$ d'un matériau lorsque sa température augmente, le renversement magnétique des zones irradiées peut être obtenu par application durant l'impulsion laser d'un champ magnétique externe.

La couche est constituée in fine d'un réseau de micro-aimants d'aimantations alternées et de dimensions définies par les dimensions du masque utilisé durant l'irradiation laser.

De manière alternative, la couche peut être chauffée par irradiation laser en absence de champ magnétique. Dans ce cas, les zones irradiées seront désaimantées, ce qui induit aussi la création d'un fort gradient de champ magnétique. Dans certains cas les zones irradiées peuvent être aimantées par le champ magnétique de la couche elle même.

Les systèmes réalisés par ce procédé présentent de très forts gradients de champ magnétique aux échelles micrométriques.

Ce principe d'empreinte thermo-magnétique peut être étendu à toutes sortes de couches magnétiques dures y compris celles présentant des aimantations isotropes ou dans le plan.

Naturellement, d'autres modes de réalisation du substrat maître peuvent être choisis par l'homme du métier sans pour autant sortir du cadre de la présente invention.

Ainsi, par exemple, un film magnétique structuré fabriqué selon le procédé de l'invention peut à son tour être utilisé en tant que substrat maître.

Selon un autre exemple, le substrat maître peut être constitué d'une pluralité de micro-bobines conductrices.

Dans un exemple non limitatif illustré à la figure 1A, le substrat maître est constitué d'une couche 11 magnétiquement dure de NdFeB présentant une épaisseur de 5 μm sur un substrat support 12 de silicium.

L'alliage NdFeB de la couche 11 a été traité par empreinte thermo-magnétique, c'est-à-dire un chauffage localisé de la couche 11 par irradiation laser à travers un masque en présence d'un champ magnétique externe, de sorte à former, au niveau des ouvertures du masque, des régions 10a d'aimantation opposée à celle des régions 10b protégées par le masque.

A la surface du substrat maître, l'intensité du champ magnétique et du gradient de champ magnétique est maximale au niveau des interfaces entre les régions 10a, 10b présentant des aimantations opposées.

Par conséquent, des nano ou microparticules présentant une susceptibilité magnétique positive sont attirées par la force magnétophorétique vers ces interfaces.

Le substrat maître n'est cependant pas limité à cette forme particulière mais peut être constitué d'un matériau magnétique dur ou doux structuré par topographie.

Le substrat maître peut éventuellement être constitué d'un réseau de micro bobines.

Lorsque le substrat maître présente une surface structurée par topographie, c'est-à-dire non plane, cette topographie particulière peut être mise à profit pour imprimer une forme complémentaire au film final.

Lorsque l'on souhaite former un film plan à partir d'un tel substrat maître, il est nécessaire de planariser celui-ci au préalable, soit par retrait de matière (par exemple au moyen d'un polissage mécano-chimique pour supprimer les plots), soit par ajout de matière (par exemple au moyen d'une technique pour combler les cavités).

Nano / microparticules magnétiques

En référence à la figure 1B, on apporte sur la face magnétiquement structurée du substrat maître 1 des nano ou des microparticules magnétiques.

Cet apport de particules peut être réalisé par toute technique appropriée ; il peut s'agir par exemple d'un saupoudrage (dans le cas d'une poudre sèche de particules), d'une coulée (dans le cas de particules en suspension dans un fluide), etc.

Sous l'effet de la force magnétophorétique attractive de la face magnétiquement structurée du substrat maître, les particules s'agglomèrent aux bords des micro-sources.

Les agglomérats se répartissent donc selon un motif qui correspond au motif des bords des micro-sources de champ magnétique du substrat maître.

Dans la mesure où la force décroît au fur et à mesure que l'on s'éloigne de la face du substrat maître, ces agglomérats présentent généralement une section triangulaire ou trapézoïdale, avec une base plus large du côté du substrat maître 1 et diminuant avec la distance.

Pour favoriser l'ordonnancement des particules non uniquement dans un plan mais aussi dans une direction perpendiculaire au substrat maître, il est possible d'appliquer simultanément un champ magnétique externe présentant une direction appropriée.

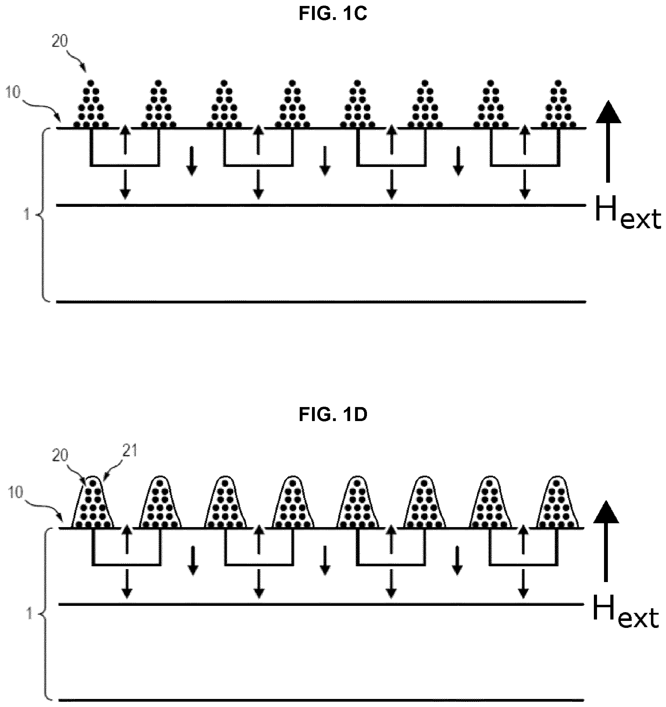

La figure 1C illustre un mode de réalisation dans lequel on applique un champ magnétique externe $H_{ext}$ qui est perpendiculaire à la face magnétiquement structurée du substrat maître, et qui tend à augmenter la hauteur des agglomérats de nano ou micro particules dans une direction perpendiculaire à la face 10 du substrat maître.

Lors du dépôt des particules, on agite avantageusement le substrat maître de manière à optimiser le piégeage des particules aux bords des micro-sources de champ magnétique.

Par ailleurs, pendant ou après le dépôt, on peut projeter un jet de gaz sec pour favoriser le piégeage des particules au niveau desdites interfaces et/ou éliminer les particules non piégées avant le dépôt de la matrice non magnétique.

Selon un mode de réalisation, les particules sont en un matériau magnétique doux.

Dans ce cas, pendant l'utilisation du film les contenant, il sera nécessaire d'appliquer un champ magnétique externe pour les aimanter.

Selon un autre mode de réalisation, les particules sont en un matériau magnétique dur.

Dans ce cas, l'application, après la formation du film, d'un champ magnétique externe permettra de les aimanter de manière permanente et ainsi de former un film magnétiquement structuré autonome.

Lorsque les particules ont été apportées sur le substrat maître au moyen d'un fluide, on évapore ledit fluide une fois que les particules se sont ordonnées sous l'effet de la force magnétophorétique.

Selon un mode de réalisation illustré sur la figure 1D, on dépose sur les agglomérats de nano ou microparticules agencés à la surface du substrat maître un ligand 21 en phase liquide, qui a pour effet de renforcer la cohésion mécanique des particules.

Les agglomérats sont ainsi moins susceptibles de se déformer lors de la formation ultérieure de la matrice.

A titre d'exemple non limitatif, un ligand approprié est un copolymère SIS (styrène-isoprène-styrène) dilué dans du toluène : le copolymère SIS se lie aux particules agglomérées lorsque l'on évapore le toluène.

Matrice non magnétique

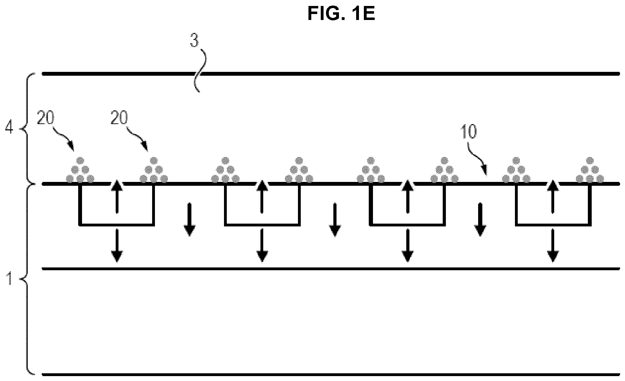

En référence à la figure 1E, on coule ou l'on dépose ensuite, sur les particules agglomérées sur le substrat maître, une matrice en un matériau non magnétique sous la forme d'une couche.

La matrice se présente avantageusement sous la forme d'un fluide, qui, une fois versé sur le substrat maître, peut être réparti sur la surface de celui-ci par un procédé d'enduction centrifuge (ou « spin coating » selon la terminologie anglo-saxonne).

L'épaisseur de la matrice est typiquement comprise entre 100 nm et 5 mm.

De manière avantageuse, la matrice est en un matériau élastomère, ce qui permet de conférer au film une certaine flexibilité.

Cependant, dans d'autres applications, une matrice rigide peut être préférable.

Selon des modes de réalisation préférés de l'invention, la matrice est en l'un des matériaux suivants : élastomère (par exemple polydiméthylsiloxane (PDMS), caoutchouc, etc.), matériau thermoplastique (par exemple polyméthacrylate de méthyle (PMMA), parylène, polystyrène, etc.) matériau thermodurcissable (par exemple polyester, résine époxy, bakélite, résine photosensible (par exemple SU-8), etc.),, oxydes tels que $SiO_2$, $Al_2O_3$, métaux, tels que Cu, Ag, matériaux carbonés tel que le graphite ou le DLC (acronyme du terme anglo-saxon « Diamond-Like Carbon »), etc.

Si nécessaire, on laisse la matrice durcir ou réticuler pendant une durée appropriée.

En fonction des applications ultérieures du film, il peut être opportun de choisir pour la matrice un matériau biocompatible (e.g. PDMS), ou d'ajouter une fine couche d'un matériau biocompatible (par exemple, couche de PDMS par « spin coating », couche de parylène par dépôt en phase vapeur).

Par ailleurs, la matrice peut être avantageusement être en un matériau transparent ou translucide.

L'homme du métier est à même de sélectionner une matrice appropriée parmi les produits disponibles sur le marché en fonction des propriétés recherchées.

Film obtenu

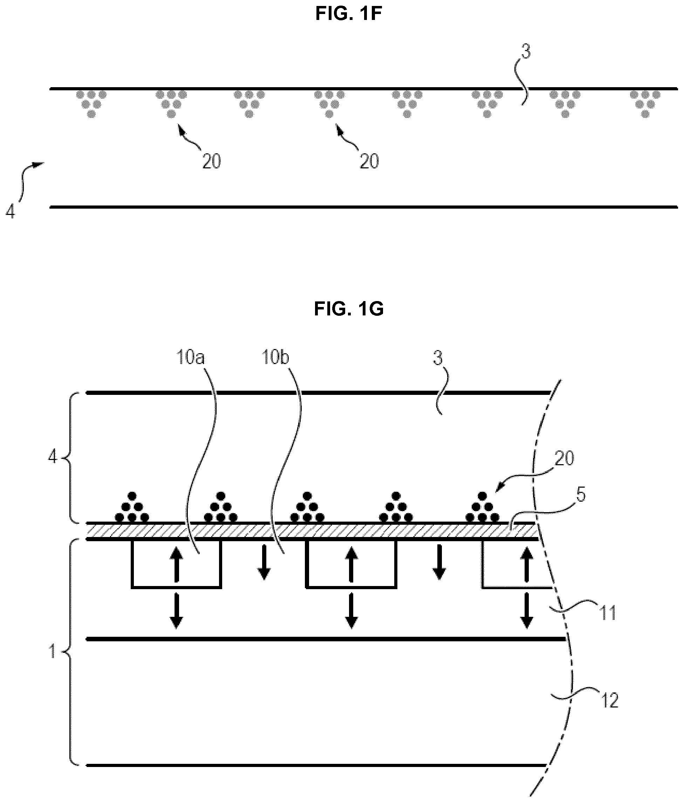

En référence à la figure 1F, on délamine le film constitué de la matrice et des agglomérats de particules magnétiques vis-à-vis du substrat maître 1.

Le substrat maître peut quant à lui être réutilisé pour la fabrication d'un nouveau film.

Ainsi, bien que le substrat maître nécessite la mise en oeuvre de techniques de microfabrication et présente par conséquent un certain coût, il peut être réutilisé indéfiniment et la fabrication du film lui-même, qui n'implique pas de telles techniques complexes et onéreuses, ne met en oeuvre que des matériaux peu coûteux.

Ce procédé est en outre aisément industrialisable et permet de réaliser des films de grande surface et en grande quantité à bas coût.

Selon une forme d'exécution de l'invention, on peut déposer sur le substrat maître, avant d'apporter les particules, une couche d'un matériau permettant de faciliter le délaminage du film.

Cette couche d'aide au délaminage reste de préférence solidaire du substrat maître lors du délaminage.

Cette couche est par exemple réalisée en parylène, en Téflon®, etc.

La figure 1G illustre un mode de réalisation du procédé dans lequel ont été successivement déposés sur le substrat maître 1 la couche 5, les particules 2 et la matrice non magnétique 3.

Même une très faible épaisseur de la couche 5 permet de remplir les fonctions évoquées ci-dessus.

Ainsi, par exemple, la couche 5 peut présenter une épaisseur inférieure à 1 mm, de préférence comprise entre 10 nm et 10 $\mu$m, de manière encore préférée entre 50 nm et 500 nm.

Après le délaminage du film vis-à-vis du substrat maître, il est possible de rendre au moins une partie la surface du film renfermant les micro ou nanoparticules électriquement conductrice, au moyen d'un dépôt d'un matériau électriquement conducteur.

Le matériau électriquement conducteur est choisi en fonction de ses propriétés d'adhésion vis-à-vis du matériau de la matrice et/ou en fonction d'un éventuel besoin de transparence.

Par exemple, pour une couche conductrice transparente, on dépose avantageusement un oxyde transparent conducteur, tel que de l'oxyde d'indium dopé à l'étain (ITO).

Si la transparence de la couche électriquement conductrice n'est pas recherchée, ladite couche peut comprendre un métal tel que de l'or, du platine et/ou du palladium.

D'autre part, selon les applications, on peut déposer une couche électriquement conductrice sur la totalité de la surface du film, ou bien seulement sur certaines régions de la surface, selon un motif déterminé, par exemple pour former localement des électrodes (pour l'application d'un champ électrique) ou des bobines (pour l'application d'un champ magnétique).

Dans ce dernier cas, des techniques de microfabrication (dépôt, lithographie, gravure...) peuvent être utilisées pour la microstructuration de la couche conductrice.

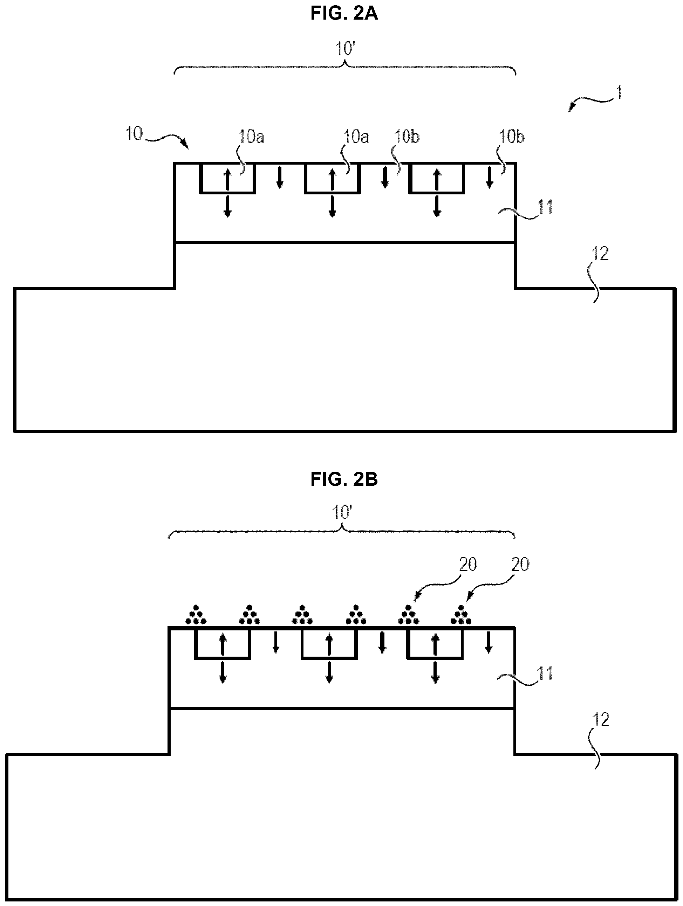

Selon un mode de réalisation illustré aux figures 2A à 2D, la face magnétiquement structurée du substrat maître 1 n'est pas plane mais présente au moins un plot ou une cavité dont le négatif sera présent sur le film.

Dans l'exemple non limitatif illustré à la figure 2A, la face magnétiquement structurée 10 du substrat maître 1 présente un plot en relief 10', la surface du plot étant constituée d'une pluralité de micro-sources de champ magnétique 10a, 10b.

Par exemple, ledit plot peut présenter une forme parallélépipédique.

Selon les applications visées, le reste de la surface du substrat maître peut également être magnétiquement structurée, mais il est aussi envisageable que seule la surface du plot 10' soit magnétiquement structurée ; dans ce dernier cas, les nano ou microparticules apportées ne s'aggloméreront qu'aux bords des micro-sources magnétiques constituant la surface du plot 10', le reste de la surface du substrat maître ne retenant pas de particules.

Comme expliqué plus haut, on apporte sur le substrat maître les nano ou microparticules magnétiques, qui s'ordonnent et s'agglomèrent en structures tridimensionnelles 20 aux bords des micro-sources de champ magnétique 10a, 10b (figure 2B).

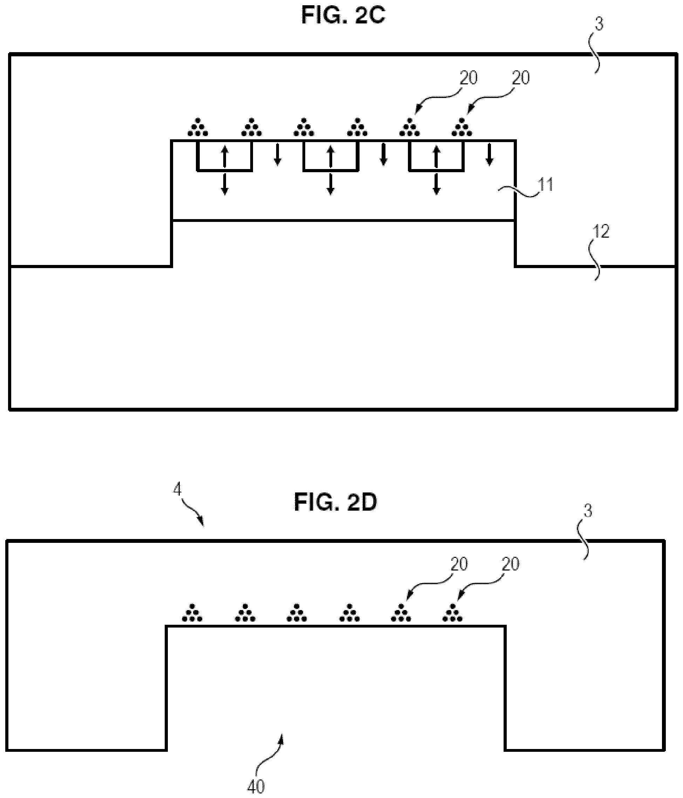

Ensuite, en référence à la figure 2C, on dépose la matrice non magnétique 3 sur le substrat maître.

A l'issue du délaminage, le film 4 ainsi obtenu illustré à la figure 2D présente donc une cavité 40 complémentaire du plot 10' du substrat maître.

Selon la forme du bossage, le film comporte ainsi un ou plusieurs puits, ou un ou plusieurs canaux.

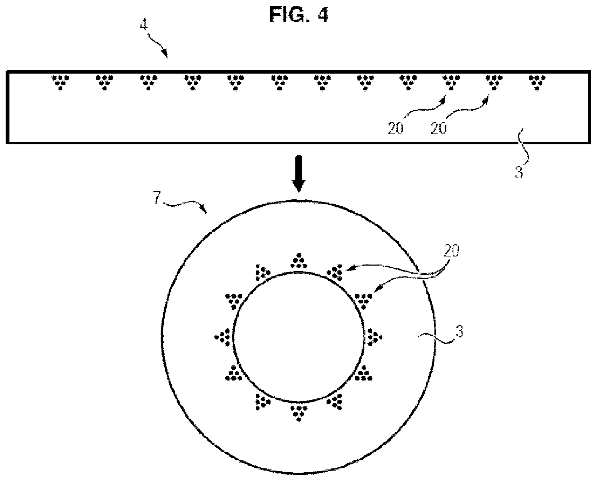

La figure 4 illustre un autre exemple d'application du film 4 de la figure 1D.

Lorsque la matrice 3 est en un matériau flexible, par exemple un élastomère, il est possible de rouler le film sur lui-même pour former un tube.

Selon l'utilisation visée, on peut rouler le film 4 de sorte à ce que les structures magnétiques tridimensionnelles soient situées sur la paroi extérieure du tube 7 ou sur la paroi intérieure de celui-ci (comme illustré à la figure 4).

Dans le cas d'une matrice thermoplastique, on peut chauffer le film pour l'enrouler.

Une autre possibilité pour mettre en forme le film contenant les microparticules, lorsque la matrice comprend un matériau thermoplastique, est de fabriquer un film plan puis de le thermoformer (« hot embossing » selon la terminologie anglo-saxonne).

Résultats expérimentaux

Le procédé décrit plus haut a été mis en oeuvre pour fabriquer un film de PDMS renfermant des microparticules de NdFeB.

De telles particules sont par exemple commercialisées par la société Magnequench sous la référence MQFP-B.

Ces particules présentent une forme irrégulière et un diamètre variant entre 1 et 10 $\mu$m, autour d'un diamètre moyen de l'ordre de 5 $\mu$m.

Ces particules, qui sont formées de nanocristaux orientés aléatoirement sont magnétiquement isotropes ($\mu 0Mr$ de l'ordre de 0,8 T).

Comme expliqué en détail plus haut, ces particules ont été apportées sur la face magnétiquement structurée d'un substrat maître (les micro-sources étant agencées sous la forme d'un échiquier dont chaque case est un carré de 100 $\mu$m de côté), puis une matrice de PDMS a été déposée.

Dans cet exemple, les structures tridimensionnelles présentent une profondeur (dans l'épaisseur du film) de l'ordre de 5 $\mu$m et une largeur maximale (au niveau de la face du film préalablement en contact avec le substrat maître) de l'ordre de 20 $\mu$m.

Des structures adjacentes sont séparées par un intervalle de 100 $\mu$m environ, qui correspond à la largeur des micro-sources de champ magnétique du substrat maître.

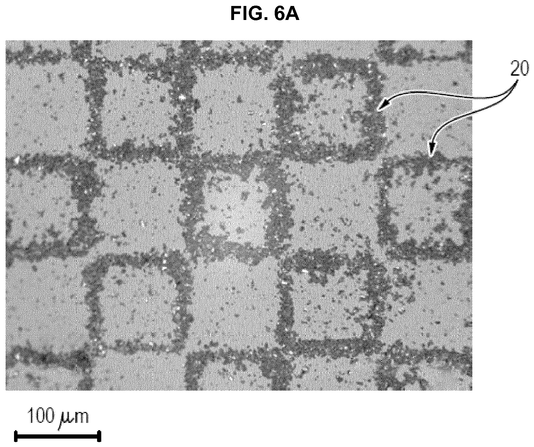

La figure 6A est une image en vue de dessus du film par microscope optique.

On peut y voir les structures 20 se répartissant sous la forme d'un motif carré correspondant aux bords des micro-sources de champ magnétique.

Après fabrication, le film a été exposé à un champ magnétique externe de 4 T, de sorte à aimanter les particules de NdFeB.

En effet, le champ magnétique du substrat maître est, dans ce cas, trop faible pour aimanter de manière suffisamment ces particules d'une forte anisotropie magnétocristalline.

## REFERENCES

[Walther09] A. Walther, C. Marcoux and B. Desloges, R. Grechishkin, D. Givord and N. M. Dempsey, J. Magn. Mag. Mat. 321 (2009) 590

[Dempsey07] N.M. Dempsey, A. Walther, F. May, D. Givord, K. Khlopkov, O. Gutfleisch, Appl. Phys. Lett. 90 (2007) 092509

[Walther08]. A. Walther, D. Givord, N.M. Dempsey, K. Khlopkov and O. Gutfleisch, J. Appl. Phys.103 (2008) 043911

D. Issadore et al, « Self-Assembled magnetic filter for highly efficient immunomagnetic separation », Lab Chip, 2011, 11, pp. 147-151

[Dumas-Bouchiat10] F. Dumas-Bouchiat et al., App. Phys. Lett. 96, 102511 (2010) C. Vézy et al. "Simple method for réversible bonding of a polydimethylsiloxane microchannel to a variety of substrates", Micro & Nano Letters, vol. 6, no. 10, pages 871-873

## Revendications

1.  Procédé de fabrication d'un film (4) comprenant une matrice (3) non magnétique et une pluralité de microstructures magnétiques tridimensionnelles (20) ordonnées au sein de ladite matrice selon un motif déterminé, comprenant les étapes de :

    - fourniture d'un substrat (1), dit substrat maître, comprenant une face (10) dite magnétiquement structurée constituée d'une pluralité de micro-sources (10a, 10b) de champ magnétique, présentant un gradient de champ magnétique compris entre $10^2$ et $10^6$ T/m,

- apport, sur la face (10) magnétiquement structurée dudit substrat maître, de micro ou nanoparticules magnétiques (2), lesdites particules s'agglomérant en microstructures tridimensionnelles ordonnées (20) sous l'effet de la force magnétophorétique attractive exercée par le gradient de champ magnétique à la surface du substrat maître,

- dépôt sur la face (10) magnétiquement structurée du substrat maître et sur les microstructures tridimensionnelles ordonnées, d'une matrice (30) d'un matériau non magnétique, de sorte à englober lesdites microstructures ordonnées et former ledit film (4),

- délaminage dudit film (4) vis-à-vis du substrat maître.

2. Procédé selon la revendication 1 , **caractérisé en ce qu'**avant le dépôt des micro ou nanoparticules magnétiques (2), on dépose sur la face (10) magnétiquement structurée du substrat maître (1) une couche (5) de sorte à faciliter le délaminage ultérieur du film (4) vis-à-vis du substrat maître (1).

3. Procédé selon l'une des revendications 1 à 2, **caractérisé en ce que** la matrice est en élastomère tel que le polydiméthylsiloxane (PDMS) ou le caoutchouc, en matériau thermoplastique tel que le polyméthacrylate de méthyle (PMMA), le parylène ou le polystyrène, en matériau thermodurcissable tel que le polyester, la résine époxy, la bakélite ou la résine photosensible, en oxyde tel que $SiO_2$, $Al_2O_3$, $HfO_2$, en métal tel que Cu, Ag, ou en matériau carboné tel que le graphite ou le DLC.

4. Procédé selon l'une des revendications 1 à 3, **caractérisé en ce que** pendant ou après le dépôt desdites micro ou nanoparticules sur le substrat maître, on agite ledit substrat maître (1) et/ou les particules (2) de sorte à optimiser la répartition des micro ou nanoparticules vis-à-vis des micro-sources de champ magnétique.

5. Procédé selon l'une des revendications 1 à 4, **caractérisé en ce qu'**avant le dépôt de la matrice (3) non magnétique, on applique un jet de gaz sur le substrat maître (1), de sorte à optimiser la répartition des micro ou nanoparticules vis-à-vis des micro-sources de champ magnétique et/ou à éliminer les particules non piégées par le champ magnétique du substrat maître.

6. Procédé selon l'une des revendications 1 à 5, **caractérisé en ce qu'**avant le dépôt de la matrice (3) non magnétique, on dépose sur les microstructures ordonnées (20) à la surface du substrat maître un ligand (21) en phase liquide de sorte à renforcer la cohésion mécanique des micro ou nanoparticules (2) formant lesdites microstructures.

7. Procédé selon l'une des revendications 1 à 6, **caractérisé en ce qu'**après le délaminage du film, on dépose sur au moins une partie de la surface du film un matériau électriquement conducteur.

8. Procédé selon l'une des revendications 1 à 7, **caractérisé en ce que** l'on enroule le film de sorte à former un tube (7).

9. Procédé selon l'une des revendications 1 à 8, **caractérisé en ce que** la face (10) magnétiquement structurée du substrat maître présente au moins une cavité et/ou au moins un plot (10'), de sorte qu'après le délaminage, le film (4) présente un plot et/ou une cavité (40) complémentaire de la cavité et/ou du plot (10') du substrat maître.

10. Procédé selon l'une des revendications 1 à 9, **caractérisé en ce que** la matrice comprend un matériau thermoplastique et **en ce qu'**après le délaminage du film, on met en forme ledit film contre un moule (8) par thermoformage.

11. Procédé selon l'une des revendications 1 à 10, **caractérisé en ce que** les micro ou nanoparticules sont en un matériau magnétique doux.

12. Procédé de fabrication d'un dispositif magnétique comprenant une pluralité de micro-aimants, comprenant la fabrication d'un film selon l'une des revendications 1 à 11 et l'application d'un champ magnétique externe audit film de sorte à aimanter les microstructures magnétiques tridimensionnelles enfermées dans la matrice de celui-ci.

13. Procédé selon la revendication 12, **caractérisé en ce que** l'on fabrique un film (4) comprenant au moins une cavité (40), et **en ce que** l'on ferme ladite cavité pour former un canal micro-fluidique (60) en assemblant ledit film (4) avec un film (4') présentant une surface magnétiquement structurée, ledit canal micro-fluidique (60) présentant ainsi deux parois magnétiquement structurées (61, 62).

**Patentansprüche**

1. Verfahren zur Herstellung einer Folie (4), die eine nicht magnetische Matrix (3) und eine Mehrzahl von dreidimensionalen magnetischen Mikrostrukturen (20) umfasst, die in der Matrix gemäß einem bestimmten Muster geordnet sind, die Schritte umfassend:

- Beschaffen eines Substrats (1), genannt Mastersubstrat, das eine sogenannte magnetisch strukturierte Fläche (10) umfasst, die aus einer Mehrzahl von Mikroquellen (10a, 10b) eines Magnetfeldes gebildet ist, die einen Magnetfeldgradienten zwischen $10^2$ und $10^6$T/m vorgeben,
- Zuführen von magnetischen Mikro- oder Nanopartikel (2) auf die magnetisch strukturierte Fläche (10) des Mastersubstrats, wobei die Partikel in dreidimensionale geordnete Mikrostrukturen (20) unter der Wirkung der magnetophoretischen Anziehungskraft, die von dem auf die Fläche des Mastersubstrats ausgeübt wird, agglomerieren
- Abscheiden auf die magnetisch strukturierte Fläche (10) des Mastersubstrats und auf die geordneten dreidimensionalen Mikrostrukturen einer Matrix (30) eines nicht magnetischen Werkstoffs, derart, dass die geordneten Mikrostrukturen eingehüllt werden und die Folie (4) gebildet wird,
- Delaminieren der Folie (4) in Bezug auf das Mastersubstrat.

**2.** Verfahren nach Anspruch 1, **dadurch gekennzeichnet, dass** vor dem Abscheiden der magnetischen Mikro- oder Nanoartikel auf die magnetisch strukturierte Fläche des Mastersubstrat (1) eine Schicht (5) aufgebracht wird, um die spätere Delaminierung der Folie (4) in Bezug auf das Mastersubstrat (1) zu erleichtern.

**3.** Verfahren nach einem der Ansprüche 1 bis 3, **dadurch gekennzeichnet, dass** die Matrix ein Elastomer, wie Polydimethylsiloxan (PDMS) oder Kautschuk aus thermoplastischem Material, wie Methylpolymethacrylat (PMMA), Parylen oder Polystyrol, aus wärmehärtbarem Material, wie Polyester, Epoxid, Bakelit oder lichtempfindliches Harz, aus Oxid, wie $SiO_2$, $Al_2O_3$, $HfO_2$, aus Metall, wie Cu, Ag oder aus kohlenstoffhaltigem Material, wie Graphit oder DLC ist.

**4.** Verfahren nach einem der Ansprüche 1 bis 3, **dadurch gekennzeichnet, dass** während oder nach dem Abscheiden der Mikro- oder Nanopartikel auf das Mastersubstrat das Mastersubstrat (1) und/oder die Partikel (2) bewegt werden, um die Verteilung der Mikro- oder Nano Party in Bezug auf die Mikroquellen des Magnetfeldes zu optimieren.

**5.** Verfahren nach einem der Ansprüche 1 bis 4, **dadurch gekennzeichnet, dass** vor dem Abscheiden der nicht magnetischen Matrix (3) ein Gasstrom auf das Mastersubstrat (1) aufgebracht wird, um die Verteilung der Mikro-oder Nanopartikel in Bezug auf die Mikroquellen des Magnetfeldes zu optimieren und/oder die nicht von dem Magnetfeld des Mastersubstrats eingefangenen Partikel zu eliminieren.

**6.** Verfahren nach einem der Ansprüche 1 bis 5, **dadurch gekennzeichnet, dass** vor dem Abscheiden der nicht magnetischen Matrix (3) auf die geordneten Mikrostrukturen (20) an der Oberfläche des Mastersubstrats ein Ligand (21) in flüssiger Phase aufgebracht wird, um die mechanische Kohäsion der Mikro- oder Nanopartikel (2), die die Mikrostrukturen bilden, zu verstärken.

**7.** Verfahren nach einem der Ansprüche 1 bis 6, **dadurch gekennzeichnet, dass** nach dem Delaminieren der Folie auf mindestens einen Teil der Fläche der Folie ein elektrisch leitendes Material aufgebracht wird.

**8.** Verfahren nach einem der Ansprüche 1 bis 7, **dadurch gekennzeichnet, dass** die Folie gerollt wird, um ein Rohr (7) zu bilden.

**9.** Verfahren nach einem der Ansprüche 1 bis 8, **dadurch gekennzeichnet, dass** die magnetisch strukturierte Fläche (10) des Mastersubstrats mindestens eine Kavität und/oder mindestens einen Ansatz (10') aufweist, derart dass nach dem Delaminieren die Folie (4) einen Ansatz und/oder eine Kavität (40) aufweist, die komplementär zu der Kavität und/oder dem Ansatz (10') des Mastersubstrats sind.

**10.** Verfahren nach einem der Ansprüche 1 bis 9, **dadurch gekennzeichnet, dass** die Matrix ein thermoplastisches Material umfasst und dass nach dem Delaminieren der Folie die Folie gegen eine Form (8) durch Thermoformen in Form gebracht wird.

**11.** Verfahren nach einem der Ansprüche 1 bis 10 **dadurch gekennzeichnet, dass** die Mikro-oder Nanopartikel aus einem weichen Magnetmaterial bestehen.

**12.** Verfahren zur Herstellung einer Magnetvorrichtung, die einer Mehrzahl von Mikromagneten umfasst, die Herstellung einer Folie nach einem der Ansprüche 1 bis 11 und das Aufbringen eines externen Magnetfeldes auf die Folie umfassend, um die magnetischen dreidimensionalen Mikrostrukturen, die in der Matrix derselben eingeschlossen sind, zu magnetisieren.

**13.** Verfahren nach Anspruch 12, **dadurch gekennzeichnet, dass** eine Folie (4) mit mindestens einer Kavität (40) hergestellt wird und das die Kavität zur Bildung eines mikrofluidischen Kanals (60) geschlossen wird, indem die Folie (4) mit einer Folie (4'), die eine magnetisch strukturierte Oberfläche aufweist, zusammengesetzt wird, wobei der mikrofluidische Kanal (60) so zwei magnetisch strukturierte Wände (61, 62) aufweist.

## Claims

1. Method for producing a film (4) comprising a non-magnetic matrix (3) and a plurality of three-dimensional magnetic microstructures (20) organised within said matrix in a predetermined pattern, comprising the steps of:

    - providing a substrate (1), called the master substrate, comprising a face (10), called the magnetically structured face, composed of a plurality of magnetic field micro-sources (10a, 10b), having a magnetic field gradient of between $10^2$ and $10^6$ T/m,
    - providing magnetic micro- or nano-particles (2) on the magnetically structured face (10) of said master substrate, said particles agglomerating into organised three-dimensional microstructures (20) under the effect of the attractive magnetophoretic force exerted by the magnetic field gradient at the surface of the master substrate,
    - depositing a matrix (30) of a non-magnetic material on the magnetically structured face (10) of the master substrate and on the organised three-dimensional microstructures, so as to enclose said organised microstructures and form said film (4),
    - delaminating said film (4) from the master substrate.

2. Method according to claim 1, **characterised in that**, before the deposition of the magnetic micro- or nano-particles (2), a layer (5) is deposited on the magnetically structured face (10) of the master substrate (1) so as to facilitate the subsequent delamination of the film (4) from the master substrate (1).

3. Method according to either claim 1 or claim 2, **characterised in that** the matrix is made of elastomer such as polydimethylsiloxane (PDMS) or rubber, of thermoplastic material such as polymethyl methacrylate (PMMA), parylene or polystyrene, of thermosetting material such as polyester, epoxy resin, bakelite or photosensitive resin, of oxide such as $SiO_2$, $Al_2O_3$, $HfO_2$, of metal such as Cu, Ag, or of carbon-containing material such as graphite or DLC.

4. Method according to any one of claims 1 to 3, **characterised in that**, during or after the deposition of said micro- or nano-particles on the master substrate, said master substrate (1) and/or the particles (2) is/are agitated so as to optimise the distribution of the micro- or nano-particles in relation to the magnetic field micro-sources.

5. Method according to any one of claims 1 to 4, **characterised in that**, before the deposition of the non-magnetic matrix (3), a jet of gas is applied to the master substrate (1) so as to optimise the distribution of the micro- or nano-particles in relation to the magnetic field micro-sources and/or to remove the particles that are not trapped by the magnetic field from the master substrate.

6. Method according to any one of claims 1 to 5, **characterised in that**, before the deposition of the non-magnetic matrix (3), a ligand (21) in liquid phase is deposited on the organised microstructures (20) on the surface of the master substrate so as to strengthen the mechanical cohesion of the micro- or nano-particles (2) forming said microstructures.

7. Method according to any one of claims 1 to 6, **characterised in that**, after the delamination of the film, an electrically conducting material is deposited on at least a portion of the surface of the film.

8. Method according to any one of claims 1 to 7, **characterised in that** the film is rolled up so as to form a tube (7).

9. Method according to any one of claims 1 to 8, **characterised in that** the magnetically structured face (10) of the master substrate has at least one cavity and/or at least one stud (10') so that, after the delamination, the film (4) has a stud and/or a cavity (40) complementary to the cavity and/or the stud (10') of the master substrate.

10. Method according to any one of claims 1 to 9, **characterised in that** the matrix comprises a thermoplastic material and **in that**, after the delamination of the film, said film is shaped against a mould (8) by thermoforming.

11. Method according to any one of claims 1 to 10, **characterised in that** the micro- or nano-particles are made of a soft magnetic material.

12. Method for producing a magnetic device comprising a plurality of micro-magnets, comprising producing a film according to any one of claims 1 to 11 and applying an external magnetic field to said film so as to magnetise the three-dimensional magnetic microstructures enclosed in the matrix thereof.

13. Method according to claim 12, **characterised in that** a film (4) comprising at least one cavity (40) is produced and **in that** said cavity is closed to form a micro-fluidic channel (60) by assembling said film (4) with a film (4') having a magnetically structured surface, said micro-fluidic channel (60) thus having two magnetically structured walls (61, 62).

## FIG. 1A

## FIG. 1B

**FIG. 1C**

**FIG. 1D**

EP 2 852 959 B1

FIG. 1E

14

## FIG. 1F

## FIG. 1G

## FIG. 2A

10'

1

10

10a    10a    10b    10b

11

12

## FIG. 2B

10'

20    20

11

12

## FIG. 2C

## FIG. 2D

**FIG. 4**

FIG. 6A

100 μm

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D. ISSADORE et al.** Self-Assembled magnetic filter for highly efficient immunomagnetic séparation. *Lab Chip,* 2011, vol. 11, 147-151
- **C. VÉZY.** Simple method for réversible bonding of a polydimethylsiloxane microchannel to a variety of substrates. *Micro & Nano Letters,* vol. 6 (10), 871-873
- **A. WALTHER ; C. MARCOUX ; B. DESLOGES ; R. GRECHISHKIN ; D. GIVORD ; N. M. DEMPSEY.** *J. Magn. Mag. Mat.,* 2009, vol. 321, 590
- **N.M. DEMPSEY ; A. WALTHER ; F. MAY ; D. GIVORD ; K. KHLOPKOV ; O. GUTFLEISCH.** *Appl. Phys. Lett.,* 2007, vol. 90, 092509
- **A. WALTHER ; D. GIVORD ; N.M. DEMPSEY ; K. KHLOPKOV ; O. GUTFLEISCH.** *J. Appl. Phys.,* 2008, vol. 103, 043911
- **D. ISSADORE et al.** Self-Assembled magnetic filter for highly efficient immunomagnetic separation. *Lab Chip,* 2011, vol. 11, 147-151
- **F. DUMAS-BOUCHIAT et al.** *App. Phys. Lett.,* 2010, vol. 96, 102511
- **C. VÉZY et al.** Simple method for réversible bonding of a polydimethylsiloxane microchannel to a variety of substrates. *Micro & Nano Letters,* vol. 6 (10), 871-873